# EUROPÄISCHE PATENTSCHRIFT

(11) **EP 1 288 113 B1**
(45) Veröffentlichungstag und Bekanntmachung des Hinweises auf die Patenterteilung: **06.10.2004**
(21) Anmeldenummer: 02017436.3
(22) Anmeldetag: 03.08.2002
(51) Int. Cl.: B62D 33/06

(54) **Fahrerhaus eines Nutzfahrzeugs**
Cabin for a utility vehicule
Cabine pour un véhicule utilitaire

(30) Priorität: 28.08.2001 DE 10141901
(43) Veröffentlichungstag der Anmeldung: 05.03.2003
(73) Patentinhaber: DaimlerChrysler AG, 70567 Stuttgart (DE)
(72) Erfinder: Fischer, Herbert, 71263 Weil der Stadt (DE); Schuller, Karl-Heinz, 71134 Aidlingen (DE); Secker, Walter, 71034 Böblingen (DE); Vahl, Uwe, 71296 Heimsheim (DE)

(56) Entgegenhaltungen:
- EP-A- 0 036 758
- EP-A- 0 949 116

## Beschreibung

Die Erfindung betrifft ein Fahrerhaus eines Nutzfahrzeugs gemäß dem Oberbegriff des Patentanspruchs 1.

Bei einem bekannten Fahrerhaus für Lastkraftwagen (DE 28 27 876 B2), das als Kurzfahrerhaus ausgeführt ist, ist im Bereich des üblichen Rückfensters in der Fahrerhaus-Rückwand ein außenliegender Behälter zur Aufnahme der Schlafliege ausgebildet, die um eine quer zur Fahrtrichtung liegende Achse schwenkbar ist. Die Schlafliege ist in ihrer Staulage vertikal im Behälter aufgenommen und wird bei Bedarf um ihre Schwenkachse in ihre Gebrauchslage herausgeklappt, in der sie sich oberhalb der Sitzkissen von Fahrer- und Beifahrersitz über diese erstreckt. Die Schlafliege liegt dabei nahe ihrem vorderen und hinteren Ende auf Stützholmen auf, die einerseits an der Rückwand angelenkt und andererseits an ihrem frei auskragenden Ende an der Decke des Fahrerhaus abgefangen sind.

Bei einem ebenfalls bekannten Fahrerhaus eines Lastkraftwagens (DE 38 21 917 C2) ist die in ihrer vertikalen Staulage oberhalb der Rückenlehnen an die ebene Rückwand des Fahrerhauses angeklappte Schlafliege einerseits an ihrer Oberkante in an der Rückwand befestigten Vertikalschienen geführt und andererseits an ihrer Unterkante über ein an der Oberseite der Rückenlehne des Beifahrersitzes befestigtes Scharnier an der Beifahrersitz-Rückenlehne drehbar angelenkt. Die Schlafliege wird mittels eines Elektromotors über Seilzüge aus ihrer Staulage in die Gebrauchslage, in welcher sie sich über die auf die Sitzkissen aufgeklappten Rückenlehnen von Fahrer- und Beifahrersitz hinweg erstreckt und umgekehrt überführt, wobei die Steuerung des Elektromotors über die Beifahrersitz-Rückenlehnenverriegelung erfolgt.

Bei beiden bekannten Fahrerhäusern muß wegen der in der Staulage an die Rückwand oberhalb der Rückenlehnen der Sitze angeklappten Schlafliege auf ein Rückfenster in der Fahrerhaus-Rückwand verzichtet werden, so daß die Sicht des Fahrers nach hinten versperrt ist. Bei dem zuletzt beschriebenen Fahrerhaus beeinträchtigt zudem die auf der Rückwand aufliegende Schlafliege die Sitzposition der Sitzbenutzer in extremen Verstellpositionen der Fahrzeugsitze. Bei dem zuerst beschriebenen Fahrerhaus entfällt zwar durch den auf der Rückseite der Fahrerhaus-Rückwand angeordneten Behälter, der die Schlafliege in ihrer vertikalen Staulage aufnimmt, diese Behinderung, doch ist dafür eine Aussparung in der Rückwand und ein die Aussparung überdeckender, tiefgezogener Behälter erforderlich, was die Fertigungskosten für die Fahrerhaus-Rückwand erhöht.

Ein Fahrerhaus gemäß dem Oberbegriff des Anspruchs 1 ist in EP 0036758A offenbart.

Der Erfindung liegt die Aufgabe zugrunde, bei einem in Kurzbausweise ausgeführten Fahrerhaus der eingangs genannten Art die Schlafliege so zu gestalten, daß sie ohne konstruktiven Eingriff in die ebene Fahrerhaus-Rückwand eine vertikale Staulage einnimmt, die weder die Sitzverstellung noch die Sitzhaltung der Sitzbenutzer in möglichen Sitzverstellpositionen beeinträchtigt.

Die Aufgabe ist erfindungsgemäß durch die Merkmale des Patentanspruchs 1 gelöst.

Das erfindungsgemäße Fahrerhaus hat den Vorteil, daß die Schlafliege in ihrer vertikalen Staulage als zusammengefaltetes Paket im Bereich zwischen den Rückenlehnen von Fahrer- und Beifahrersitz an die Fahrerhaus-Rückwand angeklappt ist. Da die Dicke des Pakets geringer ist als die Tiefe der Rückenlehnen wirkt die in die Staulage verbrachte Schlafliege selbst bei maximal zurückgestellten Sitzen in keiner Weise für die Sitzhaltung und Bewegungsfreiheit der Sitzbenutzer störend. Durch die niedrige Anordnung der in Staulage befindlichen Schlafliege bleibt der Rückwandbereich oberhalb der Rückenlehnen frei, so daß auf den Einbau eines Rückfensters in der Fahrerhaus-Rückwand für eine zusätzliche Sicht nach hinten nicht verzichtet werden muß.

Vorteilhafte Ausführungsformen des erfindungsgemäßen Fahrerhauses mit zweckmäßigen Weiterbildungen und Ausgestaltungen der Erfindung sind in den weiteren Patentansprüchen angegeben.

Gemäß einer bevorzugten Ausführungsform der Erfindung weist die Schlafliege insgesamt drei Liegenteile auf, deren in Längsrichtung der Liege gemessenen Länge jeweils kleiner ist als der minimale lichte Abstand zwischen den Rückenlehnen der Sitze. Die beiden äußeren Liegenteile sind an voneinander abgekehrten Querkanten des mittleren Liegenteils schwenkbar so gehalten, daß der eine erste äußere Liegenteil auf den mittleren Liegenteil und der andere zweite äußere Liegenteil auf den auf den mittleren Liegenteil aufgeklappten ersten äußeren Liegenteil plan aufklappbar ist. Dadurch stellt die Liege in ihrer Staulage ein nur wenig dickes Paket dar, das in seiner in der Staulage an die Rückwand angeklappten Lage nicht über die vorderen Lehnenkonturen der maximal zurückgestellten Sitze übersteht.

Um die plane Auflage der Liegenteile zu gewährleisten, ist der erste äußere Liegenteil um eine am mittleren Liegenteil festgelegte Schwenkachse um 180° schwenkbar, während zwischen dem zweiten äußeren Liegenteil und dem mittleren Liegenteil ein sich längs deren Querkanten erstreckendes Höhenausgleichsstück angeordnet ist, das um je eine Schwenkachse schwenkbar an dem mittleren Liegenteil und dem zweiten äußeren Liegenteil festgelegt ist.

Gemäß einer vorteilhaften Ausführungsform der Erfindung ist der mittlere Liegenteil mittels eines Schwenkmechanismus mit in Längsrichtung der Schlafliege, also quer zur Fahrrichtung des Nutzfahrzeugs, verlaufender Schwenkachse fahrerhausseitig, und zwar an der Fahrerhaus-Rückwand oder einem zwischen den Sitzen üblicherweise vorhandenen Motortunnel, festgelegt. Mittels dieses Schwenkmechanismus läßt sich die zum Paket zusammengefaltete Schlafliege zwischen den Rückenlehnen der Sitze hindurch an die Fahrerhaus-Rückwand anschwenken.

Gemäß einer vorteilhaften Ausführungsform der Erfindung werden die beiden äußeren Liegenteile der in Gebrauchslage sich befindlichen Schlafliege an dem mittleren Liegenteil abgestützt und der mittlere Liegenteil fahrerhausseitig am Motortunnel, vorzugsweise auf dem Rand einer häufig auf dem Motortunnel angeordneten Ablageschale abgestützt. Dies hat den Vorteil, daß die in ihre Gebrauchslage überführte Schlafliege ein steifes Teil bildet, das durch den mittlere Liegenteil fixiert ist, und die beiden äußeren Liegenteile frei über dem jeweiligen Sitzkissen der Sitze liegen, so daß unabhängig von der Ausbildung der Sitzkissen und des Höhenunterschiedes zwischen Sitzkissen und Motortunnel bzw. Ablageschale eine ebene Liegefläche zur Verfügung gestellt wird.

Gemäß einer vorteilhaften Ausführungsform der Erfindung ist zur Abstützung der beiden äußeren Liegenteile an dem mittleren Liegenteil eine Rohrkonstruktion vorgesehen, die in der Gebrauchslage der Schlafliege die drei Liegenteile steif miteinander verbindet.

Gemäß einer bevorzugten Ausführungsform der Erfindung umfaßt eine solche Rohrkonstruktion mehrere Hülsen, von denen jeweils eine an jeder Längsseite der Liegenteile angeordnet ist, und in diese Hülsen einschiebbare Bolzen, die in der Gebrauchslage der Schlafliege eine steife Verbindung zwischen den am mittleren Liegenteil angeordneten beiden Hülsen und den an den beiden äußeren Liegenteilen angeordneten Hülsen herstellen.

Die Erfindung ist anhand eines in der Zeichnung dargestellten Ausführungsbeispiels im folgenden näher beschrieben. Es zeigen jeweils in schematischer Darstellung:
- Fig. 1: ausschnittweise eine perspektivische Ansicht des Innenraums eines Fahrerhauses eines Nutzfahrzeugs mit einer Schlafliege in Gebrauchslage und Staulage,
- Fig. 2: eine perspektivische Darstellung der Schlafliege in Fig. 1 in Gebrauchslage und Staulage,
- Fig. 3: einen Querschnitt, der zu einem Paket zusammengeklappten Schlafliege in vertikaler Staulage und horizontaler Aufklapplage,
- Fig. 4: eine perspektivische Ansicht der modifizierten Schlafliege bei fehlendem mittleren Liegenteil.

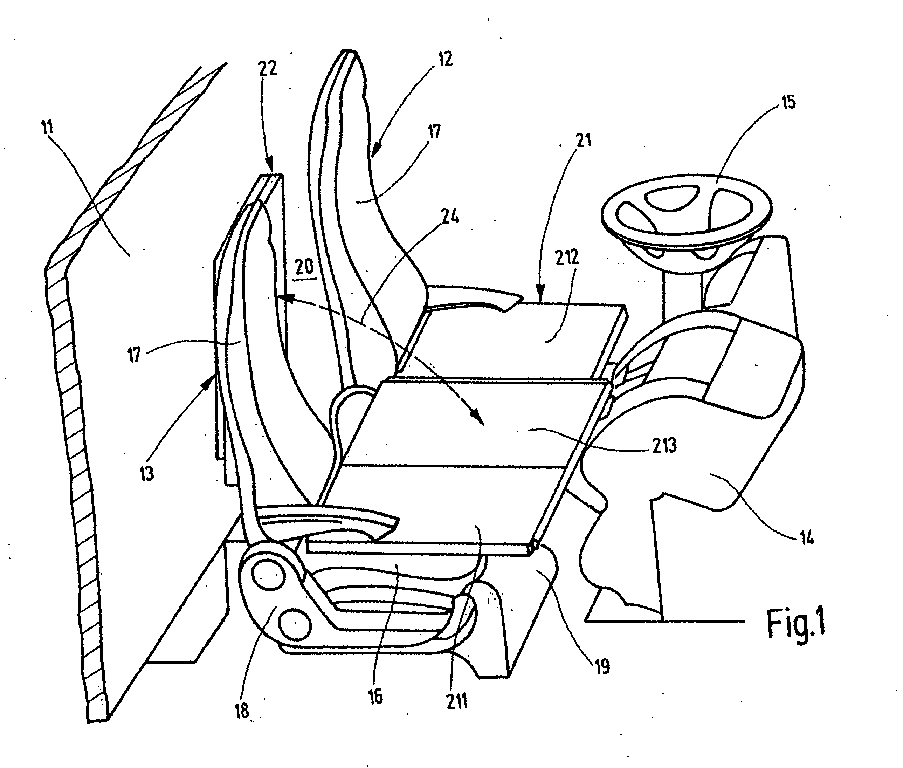

In Fig. 1 ist das Fahrerhaus eines Nutzfahrzeugs nur mit seiner abschnittweise zu sehenden Rückwand 11 angedeutet. Im Fahrerhaus sind zwei vor der Rückwand 11 angeordnete Sitze, der Fahrersitz 12 und der Beifahrersitz 13, vorhanden. Vor den Sitzen 12, 13 befinden sich eine Frontkonsole 14 mit Armaturen und Staufächern sowie ein dem Fahrersitz 12 zugeordnetes Lenkrad 15. Jeder der beiden Sitze 12, 13 weist ein Sitzkissen 16 und eine Rückenlehne 17 auf. Das Sitzkissen 16 ist in einem Sitzgestell 18 aufgenommen, das in Längsrichtung des Fahrerhauses verstellbar am Fahrerhausboden befestigt ist. Die Rückenlehne 17 ist hinter dem Sitzkissen 16 schwenkbar am Sitzgestell 18 angelenkt, so daß sie in ihrer Neigung zum Sitzkissen 16 einstellbar ist. Die Sitze 12, 13 sind auf beiden Seiten eines im Fahrerhaus sich mittig längserstreckenden, breiten Motortunnels 19 plaziert, so daß zwischen den Sitzen 12, 13 ein relativ breiter Freiraum 20 vorhanden ist.

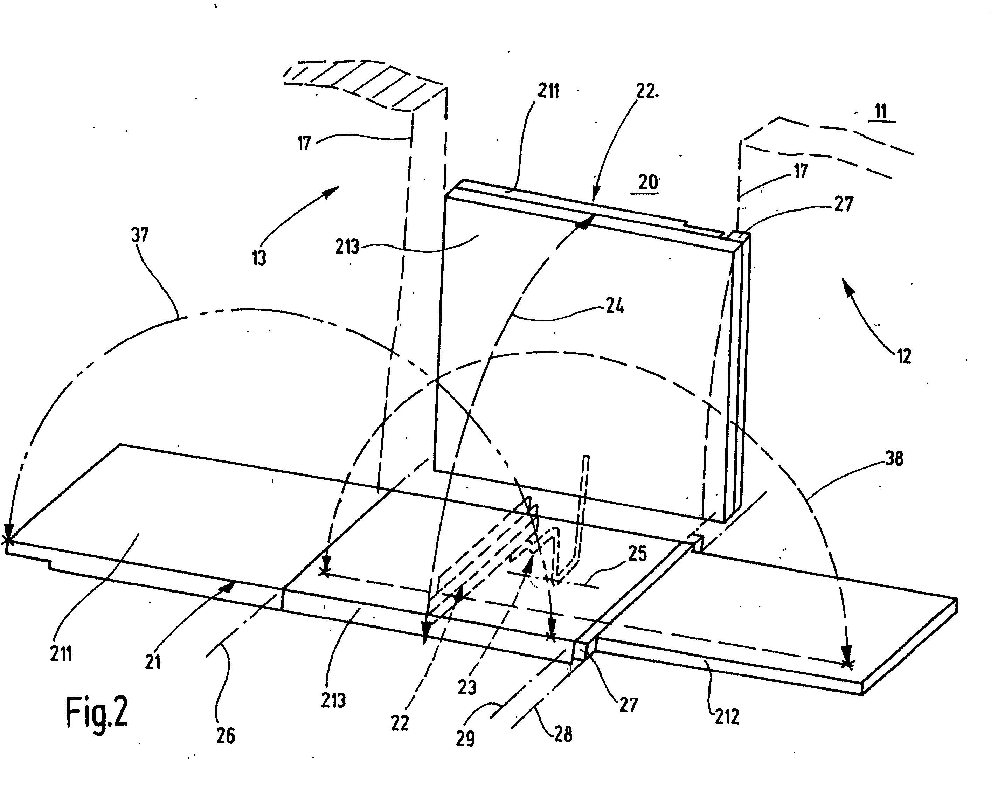

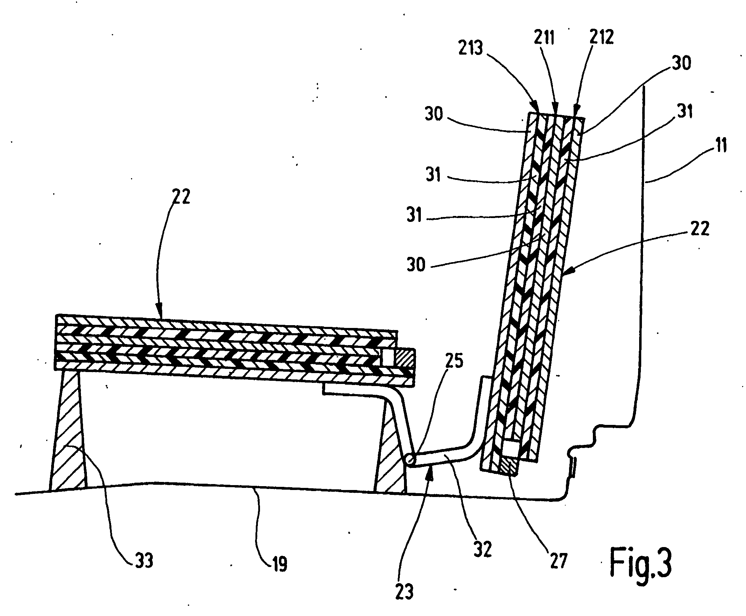

Das Fahrerhaus ist mit einer Schlafliege 21 für eine Person ausgestattet, die in einer horizontalen Gebrauchslage sich über die Sitzkissen 16 der beiden Sitze 12, 13 hinweg erstreckt und bei Nichtgebrauch in eine vertikale Staulage wegklappbar ist, in der sie an der ebenen Rückwand 11 des Fahrerhauses anliegt. Die Schlafliege 21 ist mehrteilig ausgebildet, wobei die Liegenteile so bemessen und angeordnet sind, daß sie zu einem Paket 22 zusammengefaltet werden können, dessen Querabmessung kleiner ist als der minimale lichte Abstand zwischen den Rückenlehnen 17 der Sitze 12, 13. Das so zusammengefaltete Paket 22 kann dadurch mittels eines entsprechenden Schwenkmechanismus 23 (Fig. 3) im Freiraum 20 zwischen den Rückenlehnen 17 der Sitze 12, 13 hindurch an die Rückwand 11 angeschwenkt werden, wie dies in Fig. 1 und 2 durch die Schwenkpfeile 24 angedeutet ist.

Die Schlafliege 21 ist in Fig. 1 sowohl in der Gebrauchslage als auch in der weggeschwenkten vertikalen Staulage im Fahrerhaus dargestellt. In Fig. 2 ist die Schlafliege 21 zur Verdeutlichung der Schwenkbewegungen der verschiedenen Liegenteile noch einmal isoliert dargestellt, wobei die vor der Rückwand 11 stehenden Rückenlehnen 17 von Fahrersitz 12 und Beifahrersitz 13 und der zwischen ihnen bestehende Freiraum 20 strichliniert angedeutet ist. In Fig. 3 ist ein Querschnitt der zum Paket 22 zusammengefalteten Schlafliege 21 in horizontaler Ausrichtung und in Staulage der Schlafliege 21 dargestellt, um den Schwenkmechanismus 23 zum Wegklappen des Pakets 22 aus der Horizontallage in die vertikale Staulage zu illustrieren.

Die Schlafliege 21 besteht im Ausführungsbeispiel aus insgesamt drei miteinander schwenkbeweglich verbundenen Liegenteile 211, 212, 213, die in Längsrichtung der Schlafliege 21 aneinandergesetzt sind und deren in Längsrichtung der Schlafliege 21 gemessene Länge jeweils kleiner ist als der minimale lichte Abstand zwischen den Rückenlehnen 17 der Sitze 12, 13. Der Schwenkmechanismus 23, der im Ausführungsbeispiel als einfacher Winkelhebel 32 ausgebildet ist, ist einerseits mit seinem einen Winkelschenkel an der Unterseite des mittleren Liegenteils 213 befestigt und andererseits um eine fahrerhausseitig festgelegte, querverlaufende Schwenkachse 25 schwenkbar. Die Schwenkachse 25 kann dabei am Motortunnel 19, an der Rückwand 11 des Fahrerhauses oder an einer auf dem Motortunnel 19 angeordneten Ablageschale 33 (Fig. 2 und 3) festgelegt werden. Die schwenkbare Verbindung der drei Liegenteile 211, 212, 213 miteinander ist so ausgeführt, daß der eine erste äußere Liegenteil 211 mit seiner Oberseite auf die Oberseite des mittleren Liegenteils 213 und der andere zweite äußere Liegenteil 212 mit seiner Oberseite auf die Unterseite des auf den mittleren Liegenteil 213 aufgeklappten ersten äußeren Liegenteils 211 jeweils plan auflegbar ist (vgl. Schwenkpfeile 37 und 38 in Fig. 2). Hierzu ist der erste äußere Liegenteil 211 um eine am mittleren Liegenteil 213 festgelegte Schwenkachse 26 schwenkbar, während zwischen dem zweiten äußeren Liegenteil 212 und dem mittleren Liegenteil 213 ein sich längs deren einander zugekehrten Querkanten erstreckendes Höhenausgleichsstück 27 angeordnet ist, das über je eine Schwenkachse 28 bzw. 29 mit dem zweiten äußeren Liegenteil 212 und dem mittleren Liegenteil 213 verbunden ist. Das Höhenausgleichsstück 27 hat einen quadratischen Querschnitt, dessen Abmessungen etwa der Dicke des zweiten äußeren Liegenteils 212 entspricht. Durch dieses Höhenausgleichsstück 27 wird der zweite äußere Liegenteil 212 beim Aufklappen auf den mittleren Liegenteil 213, auf dem bereits der aufgeklappte erste äußere Liegenteil 211 liegt, soweit angehoben, daß er sich im Paket 22 plan auf die Unterseite des ersten äußeren Liegenteils 211 aufzulegen vermag. Jeder der Liegenteile 211, 212, 213 besteht, wie dies in der Schnittdarstellung des Pakets 22 der zusammengefalteten Schlafliege 21 gemäß Fig. 3 zu sehen ist, aus einer steifen Platte 30 und einer auf der Platte 30 befestigten Polsterauflage 31. Sowohl die Platte 30 als auch die Polsterauflage 31 weisen eine geringe Stärke auf, damit das Paket 22 der zusammengefalteten Schlafliege 21 keine über die Tiefe der Rückenlehnen 17 hinausgehende Dicke aufweist und dadurch in seiner an die Fahrerhaus-Rückenwand 11 angeschwenkten vertikalen Staulage nicht über die Vorderkonturen der Rückenlehnen 17 der maximal nach hinten verstellten Sitze 12, 13 vorsteht.

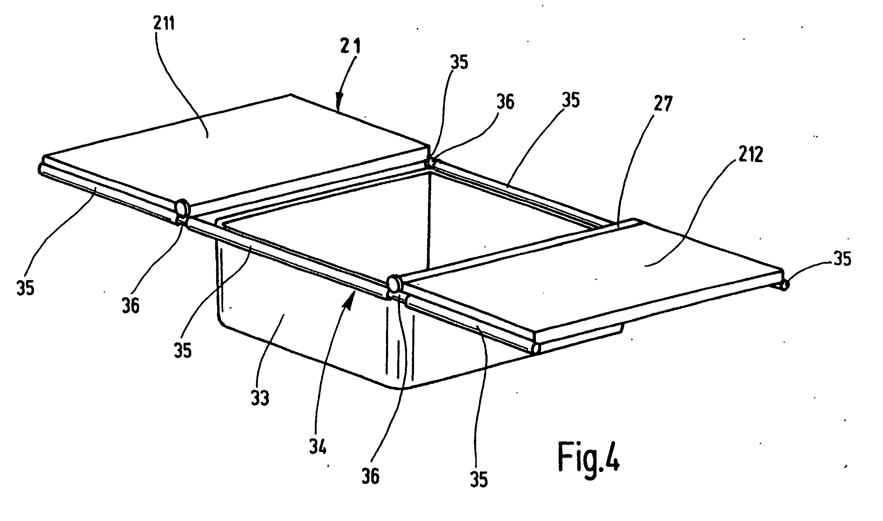

In der Gebrauchslage der Schlafliege 21 stützt sich der mittlere Liegenteil 213 fahrerhausseitig auf dem Motortunnel 19 ab. Ist auf dem Motortunnel 19 noch die Ablageschale 33 vorhanden, die in Fig. 4 und im Schnitt auch in Fig. 3 dargestellt ist, so liegt der mittlere Liegenteil 213 mit seiner Unterseite auf dem Rand der Ablageschale 33 auf, wie dies in Fig. 3 zu sehen ist. Die in der Gebrauchslage der Schlafliege 21 von dem mittleren Liegenteil 213 um die Schwenkachsen 26 bzw. 28 und 29 weggeklappten beiden äußeren Liegenteile 211 und 212, die mit Abstand oberhalb der Sitzkissen 16 liegen, stützen sich an dem mittleren Liegenteil 213 ab. Für diese Abstützung der beiden äußeren Liegenteile 211 und 212 ist eine Rohrkonstruktion 34 vorgesehen, die in der Gebrauchslage der Schlafliege 21 die drei Liegenteile 211 - 213 steif miteinander verbindet. Diese Rohrkonstruktion 34 ist teilweise in Fig. 1 zu sehen und in Fig. 4 im Detail dargestellt. Fig. 4 zeigt dabei eine Schlafliege 21, die insoweit gegenüber Fig. 1 - 3 modifiziert ist, als die beiden äußeren Liegenteile 211, 212 gleiche Abmessungen aufweisen, während bei der Schlafliege 21 gemäß Fig. 1 und 3 das zweite äußere Liegenteil 212 eine reduzierte Querabmessung aufweist. Bei der in Fig. 4 in Gebrauchslage dargestellten Schlafliege 21 ist zur besseren Darstellung der Ablageschale 33 und der Rohrkonstruktion 34 der mittlere Liegenteil 213 entfernt.

Die Rohrkonstruktion 34 weist insgesamt sechs Hülsen 35 und vier in die Hülsen 35 formschlüssig einschiebbare Bolzen 36 auf. Jeweils eine Hülse 35 erstreckt sich über je eine Längskante der drei Liegenteile 211 - 213, so daß in der Gebrauchslage der Schlafliege 21 an jeder Längsseite der Schlafliege 21 drei Hülsen miteinander fluchtend ausgerichtet sind. Zwischen den Hülsen 35 des mittleren Liegenteils 213 und den Hülsen 35 der äußeren Liegenteile 211 sind die Bolzen 36 eingeschoben, so daß zwischen den jeweils miteinander fluchtenden drei Hülsen 35 eine steife Verbindung hergestellt ist. Die Bolzen 36 können manuell oder durch einen Federmechanismus z.B. aus den beiden Hülsen 35 im mittleren Liegenteil 213 ausgeschoben werden.

Liegen die Oberflächen der Sitzkissen 16 und die Oberkante der Ablageschale 33 in einer horizontalen Ebene, so kann auf die Rohrkonstruktion 34 verzichtet werden, und die beiden äußeren Liegenteile 211, 212 stützen sich unmittelbar auf den Sitzkissen 16 ab. Allerdings erfordert diese Liege bauliche Voraussetzungen im Fahrerhaus und ist nicht universell bei allen Fahrerhäusern verwendbar.

Werden die Schwenkachsen 26 und 28 oder 29 der Liegenteile 211, 212, 213 mit Rastungen versehen, so können die beiden äußeren Liegenteile 211 und 212 gegenüber dem mittleren Liegenteil 213 um definierte Winkel angestellt und so eine von dem Benutzer in der Liegestellung gewünschte Erhöhung von Kopf und/oder Beinen realisiert werden. Auch in diesem Fall entfällt die Rohrkonstruktion.

## Patentansprüche

1. Fahrerhaus eines Nutzfahrzeugs, mit einer Rückwand (11), mit zwei vor der Rückwand (11) angeordneten, einen Freiraum (20) zwischen sich freilassenden Sitzen (12, 13), die jeweils ein Sitzkissen (16) und eine Rückenlehne (17) aufweisen, und mit einer wegklappbaren Schlafliege (21), die in einer vertikalen Staulage an der Rückwand (11) liegt und in einer horizontalen Gebrauchslage sich über die Sitzkissen (16) erstreckt,
wobei die Schlafliege (21) mehrteilig ausgebildet ist, **dadurch gekennzeichnet**, daß die Liegenteile (211, 212, 213) zu einem im Freiraum (20) maßhaltigen Paket (22) zusammenfaltbar sind und daß das Paket (22) im Freiraum (20) zwischen den Rückenlehnen (17) der Sitze (12, 13) hindurch an die Rückwand (11) anschwenkbar ist.

2. Fahrerhaus nach Anspruch 1,
**dadurch gekennzeichnet,**
**daß** die Liegenteile (211, 212, 213) in Längsrichtung der Schlafliege (21) aneinandergesetzt und schwenkbar miteinander verbunden sind und im Paket (22) plan aufeinander aufliegen.

3. Fahrerhaus nach Anspruch 2,
**dadurch gekennzeichnet,**
**daß** die Schlafliege (21) insgesamt drei Liegenteile (211, 212, 213) aufweist, deren in Längsrichtung der Schlafliege (21) gemessene Länge jeweils kleiner ist als der minimale lichte Abstand zwischen den Rückenlehnen (16) der Sitze (12, 13).

4. Fahrerhaus nach Anspruch 3,
**dadurch gekennzeichnet,**
**daß** der mittlere Liegenteil (213) mittels eines Schwenkmechanismus (23) mit in Längsrichtung der Schlafliege (21) verlaufender Schwenkachse (25) fahrerhausseitig festgelegt ist.

5. Fahrerhaus nach Anspruch 4,
**dadurch gekennzeichnet,**
**daß** der Schwenkmechanismus (23) an der Unterseite des mittleren Liegenteils (213) befestigt ist.

6. Fahrerhaus nach einem der Ansprüche 3 - 5,
**dadurch gekennzeichnet,**
**daß** von den drei Liegenteilen (211, 212, 213) der eine erste äußere Liegenteil (211) mit seiner Oberseite auf die Oberseite des mittleren. Liegenteils (213) und der andere zweite äußere Liegenteil (212) mit seiner Oberseite auf die Unterseite des auf den mittleren Liegenteil (213) aufgeklappten ersten äußeren Liegenteils (211) jeweils plan aufklappbar ist.

7. Fahrerhaus nach Anspruch 6,
**dadurch gekennzeichnet,**
**daß** zwischen dem zweiten äußeren Liegenteil (212) und dem mittleren Liegenteil (213) ein sich längs deren einander zugekehrten Querkanten erstreckendes Höhenausgleichsstück (27) angeordnet ist, das um je eine Schwenkachse (28, 29) schwenkbar an den beiden Liegenteile (212, 213) festgelegt ist.

8. Fahrerhaus nach einem der Ansprüche 4 - 7,
**dadurch gekennzeichnet,**
**daß** in der Gebrauchslage der Schlafliege (21) der mittlere Liegenteil (213) sich fahrerhausseitig abstützt, vorzugsweise auf einem zwischen den Sitzen (12, 13) vorhandenen Motortunnel (19) oder auf dem Rand einer auf dem Motortunnel (19) angeordneten Ablageschale (33) aufliegt.

9. Fahrerhaus nach Anspruch 8,
**dadurch gekennzeichnet,**
**daß** in Gebrauchslage der Schlafliege (21) die beiden äußeren Liegenteile (211, 212) auf den Sitzkissen (16) der beiden Sitze (12, 13) aufliegen.

10. Fahrerhaus nach Anspruch 8,
**dadurch gekennzeichnet,**
**daß** in der Gebrauchslage der Schlafliege (21) die beiden äußeren Liegenteile (211, 212) an dem mittleren Liegenteil (213) abgestützt sind.

11. Fahrerhaus nach Anspruch 10,
**dadurch gekennzeichnet,**
**daß** zur Abstützung der beiden äußeren Liegenteile (211, 212) eine Rohrkonstruktion (34) vorgesehen ist, die in der Gebrauchslage der Schlafliege (21) die drei Liegenteile (211, 212, 213) steif miteinander verbinden.

12. Fahrerhaus nach Anspruch 11,
**dadurch gekennzeichnet,**
**daß** die Rohrkonstruktion (34) mehrere Hülsen (35), von denen jeweils eine an jeder Längsseite der Liegenteile (211, 212, 213) angeordnet ist, und in die Hülsen (35) formschlüssig einschiebbare Bolzen (36) aufweist, die in der Gebrauchslage der Schlafliege (21) eine steife Verbindung zwischen den am mittleren Liegenteil (213) angeordneten beiden Hülsen (35) und den damit fluchtenden, an den beiden äußeren Liegenteilen (211, 212) angeordneten Hülsen (35) herstellen.

13. Fahrerhaus nach einem der Ansprüche 1 - 12,
**dadurch gekennzeichnet,**
**daß** jedes Liegenteil (211, 212, 213) aus einer steifen Platte (30) und aus einer auf der Platte (30) befestigten Polsterauflage (31) besteht.

## Claims

1. A driver's cab of a commercial vehicle having a rear wall (11), two seats (12, 13) positioned in front of the rear wall (11) and leaving a space (20) between them, each of which having a seat cushion (16) and a seat back (17), and a fold-away sleeper berth (21) which lies against the rear wall (11) in a vertical stowed position and extends over the seat cushions (16) in a horizontal operational position, the sleeper berth (21) being designed in several parts,
**characterised in that**
the berth parts (211, 212, 213) can be folded together to form a unit (22) which fits exactly in the space (20) and the unit (22) can be pivoted through the space (20) between the seat backs (17) and the seats (12, 13) to the rear wall (11).

2. A driver's cab in accordance with claim 1,
**characterised in that**
the berth parts (211, 212, 213) lie one against the other along the length of the sleeper berth (21) and are connected together in such a manner that they are able to pivot while they lie flat one on top of the other in the unit (22).

3. A driver's cab in accordance with claim 2,
**characterised in that**
the sleeper berth (21) has a total of three berth parts (211, 212, 213), the length of which measured along the sleeper berth (21) is less than the minimum clear distance between the seat backs (16) of the seats (12, 13).

4. A driver's cab in accordance with claim 3,
**characterised in that**
the central berth part (213) is fixed to the driver's cab by means of a pivoting mechanism (23) with an axis of pivoting (25) which runs along the length of the sleeper berth (21).

5. A driver's cab in accordance with claim 4,
**characterised in that**
the pivoting mechanism (23) is fixed to the underside of the central berth part (213).

6. A driver's cab in accordance with one of claims 3 to 5,
**characterised in that**
of the three berth parts (211, 212, 213), the top of the one first outer berth part (211) can be folded flat onto the top of the central berth part (213) while the top of the other second outer berth part (121) can be folded flat onto the underside of the first outer berth (211) which itself is folded onto the central berth part (213).

7. A driver's cab in accordance with claim 6,
**characterised in that**
between the second outer berth part (212) and the central berth part (213) is positioned a height equalising part (27) which extends along the facing transverse edges of said berth parts (212, 213) and which is fixed to the said two berth parts (212, 213) in such a manner that it is able to pivot about two axes of pivoting (28, 29).

8. A driver's cab in accordance with one of claims 4 to 7,
**characterised in that**
when the sleeper berth (21) is in the operational position, the central berth part (213) is supported on the driver's cab, preferably lying on an engine tunnel (19) provided between the seats (12, 13) or on the edge of a storage compartment (33) positioned on the engine tunnel (19).

9. A driver's cab in accordance with claim 8,
**characterised in that**
when the sleeper berth (21) is in the operational position, the two outer berth arts (211, 212) lie on the seat cushions (16) of the two seats (12, 13).

10. A driver's cab in accordance with claim 8,
**characterised in that**
when the sleeper berth (21) is in the operational position, the two outer berth parts (211, 212) are supported on the central berth part (213).

11. A driver's cab in accordance with claim 10,
**characterised in that**
in order to support the two outer berth arts (211, 212), a tubular structure (34) is provided which connects the three berth parts (211, 212, 213) together rigidly when the sleeper berth (21) is in the operational position.

12. A driver's cab in accordance with claim 11,
**characterised in that**
the tubular construction (24) has several sleeves (35), one of which is positioned on each longitudinal side of the berth parts (211, 212, 213), and bolts (36) which can be inserted into the sleeves (35) to form a positive-locking connection and which, when the sleeper berth (21) is in the operational position, produce a rigid connection between the two sleeves (35) positioned on the central berth part (213) and the sleeves (35) positioned on the two outer berth parts (211, 212) which lie flush with the two aforementioned sleeves (35).

13. A driver's cab in accordance with one of claims 1 to 12,
**characterised in that**
each berth part (211, 212, 213) is made of a rigid plate (30) and a padded support (31) fixed to said plate (30).

## Revendications

1. Cabine d'un véhicule utilitaire, comportant une paroi arrière (11), avec deux sièges (12, 13) ayant un espace vide (20) entre eux, disposés devant la paroi arrière (11), sièges qui comprennent respectivement un coussin d'assise (16) et un dossier (17), et comportant un lit rabattable (21) qui se trouve sur la paroi arrière (11) dans une position de repos verticale et s'étend au-dessus des coussins d'assise (16) dans une position d'utilisation horizontale, sachant que le lit (21) est réalisé en plusieurs parties, **caractérisée en ce que** les parties du lit (211, 212, 213) peuvent être repliées pour former une unité (22) rentrant exactement dans l'espace vide (20) et **en ce que** l'unité (22) peut être pivotée sur la paroi arrière (11), dans l'espace vide (20) entre les dossiers (17) des sièges (12, 13).

2. Cabine selon la revendication 1, **caractérisée en ce que** les parties du lit (211, 212, 213) sont placées les unes à côté des autres dans le sens longitudinal du lit (21) et reliées les unes aux autres de manière à pouvoir pivoter et reposent de manière plane les unes sur les autres dans l'unité (22).

3. Cabine selon la revendication 2, **caractérisée en ce que** le lit (21) comprend au total trois parties de lit (211, 212, 213) dont la longueur mesurée dans le sens longitudinal du lit (21) est respectivement inférieure à l'écart minimal entre les dossiers (16) des sièges (12, 13).

4. Cabine selon la revendication 3, **caractérisée en ce que** la partie médiane du lit (213) est fixée, du côté de la cabine, au moyen d'un mécanisme de pivotement (23) avec un axe de pivotement (25) s'étendant dans le sens longitudinal du lit (21).

5. Cabine selon la revendication 4, **caractérisée en ce que** le mécanisme de pivotement (23) est fixé à la face inférieure de la partie médiane du lit (213).

6. Cabine selon les revendications 3 à 5, **caractérisée en ce que**, parmi les trois parties de lit (211, 212, 213), la première partie externe du lit (211) peut être rabattue avec sa face supérieure sur la face supérieure de la partie médiane du lit (213) et la deuxième partie externe du lit (212) peut être rabattue avec sa face supérieure sur la face inférieure de la première partie externe du lit (211) rabattue sur la partie médiane du lit (213), et ceci de manière respectivement plane.

7. Cabine selon la revendication 6, **caractérisée en ce qu'**entre la deuxième partie externe du lit (212) et la partie médiane du lit (213), est disposée une pièce de compensation de la hauteur (27) s'étendant le long de leurs arêtes transversales tournées l'une vers l'autre, pièce qui est fixée aux deux parties de lit (212, 213) de manière à pouvoir respectivement pivoter autour d'un axe de pivotement (28, 29).

8. Cabine selon les revendications 4 à 7, **caractérisée en ce que**, dans la position d'utilisation du lit (21), la partie médiane du lit (213) prend appui du côté de la cabine, repose de préférence sur un tunnel de transmission (19) en place entre les sièges (12, 13) ou sur le bord d'un coffret de rangement (33) disposé sur le tunnel de transmission (19).

9. Cabine selon la revendication 8, **caractérisée en ce que**, dans la position d'utilisation du lit (21), les deux parties externes du lit (211, 212) reposent sur les coussins d'assise (16) des deux sièges (12, 13).

10. Cabine selon la revendication 8, **caractérisée en ce que**, dans la position d'utilisation du lit (21), les deux parties externes du lit (211, 212) sont en appui sur la partie médiane du lit (213).

11. Cabine selon la revendication 10, **caractérisée en ce que**, pour l'étaiement des deux parties externes du lit (211, 212), on a prévu une structure tubulaire (34) qui relie les unes aux autres, de manière rigide, les trois parties du lit, dans la position d'utilisation du lit (21).

12. Cabine selon la revendication 11, **caractérisée en ce que** la structure tubulaire (34) comporte plusieurs gaines (35), parmi lesquelles une gaine est respectivement disposée sur chaque côté longitudinal des parties du lit (211, 212, 213), et des boulons (36) pouvant être insérés par liaison mécanique dans les gaines (35), boulons qui établissent dans la position d'utilisation du lit (21) une liaison rigide entre les deux gaines (35) disposées sur la partie médiane du lit (213) et les gaines (35), s'alignant avec celles-ci, disposées sur les deux parties externes du lit (211, 212).

13. Cabine selon l'une des revendications 1 à 12, **caractérisée en ce que** chaque partie du lit (211, 212, 213) est composée d'une plaque rigide (30) et d'un revêtement rembourré (31) fixé à la plaque (30).
